# FASCICULE DE BREVET EUROPEEN

(11) **EP 1 541 833 B1**
(45) Date de publication et mention de la délivrance du brevet: **27.06.2012**
(21) Numéro de dépôt: 04292718.6
(22) Date de dépôt: 17.11.2004
(51) Int. Cl.: F02C 7/272

(54) **Générateur de gaz et turboréacteur équipé d'un tel générateur pour le démarrage**
Gasgenerator sowie mit diesem ausgestattetes Turbostrahltriebwerk für das Anlassen
Gas generator and jet engine being equipped with the same for starting

(30) Priorité: 21.11.2003 FR 0313639
(43) Date de publication de la demande: 15.06.2005
(73) Titulaire: Snecma Propulsion Solide, 33187 Le Haillan Cedex (FR)
(72) Inventeur: Soulie, Laurent, 33000 Bordeaux (FR); Fischer, Roger, 33200 Bordeaux (FR)
(74) Mandataire: Desormiere, Pierre-Louis

(56) Documents cités:
- EP-A- 0 333 945
- DE-A- 4 208 844
- DE-B- 1 033 964
- US-A- 2 848 872
- US-A- 3 750 394

## Description

La présente invention concerne les générateurs de gaz sous pression utilisés pour entraîner des machines tournantes telles que des turboréacteurs.

Le domaine d'application de l'invention est plus particulièrement, mais non exclusivement, celui des missiles de croisières munis de turboréacteurs et pour lesquels l'encombrement diamétral est limité.

Les missiles de croisière utilisent un turboréacteur pour la propulsion en phase stabilisée. Pour les missiles lancés depuis un avion, le turboréacteur peut démarrer en autorotation grâce à la vitesse et à l'altitude de largage. Pour les versions lancées depuis un bateau ou un sous-marin, un générateur de gaz est nécessaire pour assurer la mise en rotation rapide turboréacteur. Plus précisément, le débit de gaz issu du générateur est utilisé pour mettre en action la turbine du turboréacteur.

Les générateurs de gaz actuellement utilisés pour le démarrage des turboréacteurs de missiles se présentent sous la forme de cylindres qui sont logés à côté du turboréacteur. Un tel système est particulièrement pénalisant en ce qui concerne le calibre du missile puisqu'il conduit inévitablement à une augmentation du diamètre d'encombrement du turboréacteur. Cette augmentation de diamètre peut même avoir caractère rédhibitoire lorsque l'encombrement du missile est limité par la capacité de logement des dispositifs de lancement tels que des tubes lance-torpilles d'un sous-marin. Un générateur annulaire est connu de EP 0 333 945.

### Objet et résumé de l'invention

La présente invention a pour but de proposer un générateur de gaz dont la conception permet une intégration optimale de ses éléments dans la structure de l'engin avec lequel il est utilisé afin d'éliminer ou réduire l'impact du générateur sur l'encombrement dudit engin.

Ce but est atteint du fait que, conformément à l'invention, le générateur de gaz comprend une enveloppe de forme annulaire ou semi-annulaire dans laquelle est logée une charge pyrotechnique qui produit des gaz sous pression lors de sa combustion. L'enveloppe comprend au moins une ouverture pour permettre l'éjection des gaz produits. Ainsi, le principal élément constitutif du générateur de gaz, à savoir l'enveloppe et la charge constituant la source de gaz sous pression, présente une forme en anneau ou portion d'anneau qui est facilement intégrable dans une structure notamment lorsqu'il s'agit d'une structure de machine tournante telle qu'un turboréacteur par exemple.

En outre, selon l'invention, la charge pyrotechnique est constituée d'une pluralité d'éléments de chargement unitaires disposés les uns derrière les autres à l'intérieur de l'enveloppe. L'utilisation d'éléments unitaires disposés de façon ordonnée dans l'enveloppe permet, d'une part, de faciliter le chargement du générateur vis-à-vis de la forme annulaire de l'enveloppe et, d'autre part, d'obtenir une charge avec des caractéristiques physiques constantes qui assure une bonne reproductibilité du fonctionnement pyrotechnique, ce qui n'est pas le cas, par exemple, avec un chargement en vrac.

La charge pyrotechnique peut être constituée d'une pluralité de segments de chargement unitaires espacés les uns des autres dans l'enveloppe au moyen d'intercalaires élastiques qui, une fois en compression après chargement complet de l'enveloppe, assurent le maintien en position des segments.

Selon une variante, la charge de propergol est constituée d'un chargement chaîné. Un tel chargement chaîné peut être constitué d'une succession d'éléments de chargement unitaires assemblés entre eux au moyen d'au moins un câble de liaison. Les éléments de chargement unitaires sont maintenus espacés les uns des autres par des entretoises afin de faciliter leur disposition à l'intérieur de l'enveloppe annulaire.

Le générateur peut comprendre un ou plusieurs inflammateurs fixés sur l'enveloppe pour commander l'allumage de la charge pyrotechnique. L'enveloppe est également munie d'une ouverture et d'un élément d'obturation permettant d'introduire la charge pyrotechnique à l'intérieur de celle-ci.

L'enveloppe peut être constituée en un matériau métallique tel que de l'acier inoxydable ou en matériau composite thermostructural.

L'invention a également pour but de proposer un turboréacteur comprenant un générateur de gaz pour le démarrage dont la présence n'augmente pas ou très peu le calibre du turboréacteur.

Ce but est atteint en équipant le turboréacteur du générateur de gaz décrit précédemment. En effet, conformément à l'invention, le générateur de gaz comprend une enveloppe annulaire ou semi-annulaire qui renferme une charge pyrotechnique qui, lors de sa combustion, produit des gaz qui permettent de mettre en rotation le compresseur ou la turbine du turboréacteur. Ainsi, grâce à sa structure en anneau ou en section d'anneau, l'enveloppe est proche de la forme externe du moteur et permet de répartir le chargement pyrotechnique sur le pourtour du moteur éliminant ou minimisant ainsi l'augmentation du calibre de l'engin.

Le générateur de gaz peut être placé du côté de la turbine ou bien du côté du compresseur.

Lorsqu'il est placé du côté de la turbine, l'enveloppe du générateur est fixée de préférence sur la partie convergente du carter de turbine ou dans une portion resserrée notamment lorsque le turboréacteur présente à cet endroit une structure en taille de guêpe. Dans ce cas, le générateur comprend en outre des moyens pour acheminer les gaz produits dans l'enveloppe jusqu'aux aubes de la turbine.

D'autre part, lorsque le générateur de gaz est placé au voisinage du compresseur, le tore d'alimentation en air comprimé déjà présent sur le turboréacteur et servant au démarrage lors des essais de recette au banc en usine, peut être avantageusement utilisé pour former l'enveloppe de stockage du chargement. La conception du dispositif de démarrage est alors encore plus intégrée.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels
- la figure 1 est une vue en perspective d'un générateur de gaz conformément à un mode de réalisation de l'invention,
- la figure 2 est une vue en perspective d'un générateur de gaz conformément à un autre mode de réalisation de l'invention,
- la figure 3 est une vue en perspective d'un générateur de gaz selon encore un autre mode de réalisation de l'invention,
- la figure 4A est une vue en coupe très schématique d'un turboréacteur muni de générateurs de gaz selon l'invention,
- la figure 4B est une vue agrandie d'une partie IIIB du turboréacteur de la figure 4A, et
- la figure 5 est une vue en perspective très schématique du turboréacteur de la figure 4A,

### Description détaillée des modes de réalisation de l'invention

Le générateur de gaz de la présente invention va être notamment décrit en tant que dispositif de démarrage pour un turboréacteur. Toutefois, l'invention s'applique plus généralement à toute machine susceptible d'utiliser des générateurs de gaz et pour laquelle la minimisation de l'encombrement d'un tel appareil revêt une importance particulière. Aussi, l'homme du métier pourra envisager sans difficulté d'autres applications de l'invention.

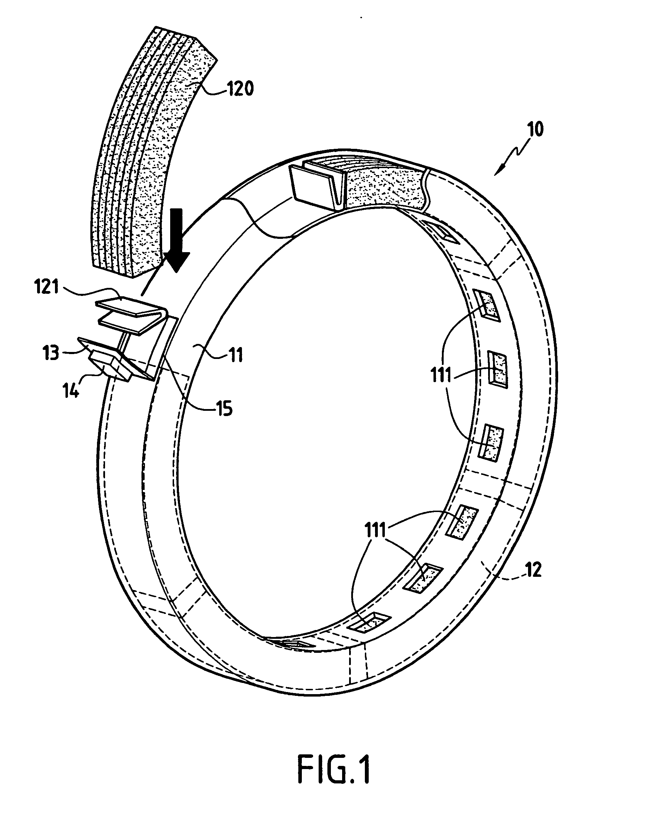

La figure 1 illustre un mode de réalisation d'un générateur de gaz conformément à l'invention. Le générateur de gaz 10 comprend une enveloppe annulaire 11 formant une chambre pour une charge pyrotechnique 12 composée d'une pluralité de segments de chargement unitaires 120. Chaque segment 120 est constitué par exemple d'un bloc de propergol solide qui présente une forme cintrée correspondant à la courbure de l'enveloppe. La mise en forme des segments 120 peut être réalisée par moulage ou par cintrage. Les segments présentent des dimensions externes sensiblement inférieures à celles du logement formé par l'enveloppe 11 afin de ménager des passages entre les segments et l'enveloppe constituant des voies de circulation des gaz produits lors de la combustion. Alternativement, les voies de circulation des gaz peuvent être ménagées directement sur les segments en usinant des rainures ou saignées à la surface de ceux-ci.

Afin de permettre aux gaz produits de s'échapper de l'enveloppe 11, des orifices de sortie ou évents 111 sont ménagés sur cette dernière. Les évents sont de préférence répartis angulairement de façon régulière tout autour de l'enveloppe afin d'avoir une pression sensiblement uniforme à l'intérieure de celle-ci. Le positionnement des évents sur l'enveloppe dépend de la direction vers laquelle on souhaite diriger les gaz en sortie. Ainsi, il est possible de diriger les gaz dans une ou plusieurs directions en fonction de la ou des directions d'ouverture des évents. De plus, la forme et les dimensions des évents sont définies en fonction respectivement de la forme et du débit du flux de gaz que l'on souhaite obtenir.

Comme illustré sur la figure 1, les segments 120 sont introduits un à un dans l'enveloppe 11 au moyen d'une ouverture 15 munie d'un élément d'obturation 13 qui permet d'accéder à l'intérieur de l'enveloppe. On interpose entre deux segments un intercalaire élastique 121. Lorsque tous les segments sont introduits dans l'enveloppe, les intercalaires 121 comprimés assurent le maintien en position des segments dans l'enveloppe.

L'allumage de la charge constituée par les segments 120 est réalisée par un ou plusieurs inflammateurs 14 qui peuvent être par exemple un inflammateur commandé par ligne électrique, détonique, laser ou déflagrante. Sur la figure 1, un inflammateur 14 est placé sur l'élément d'obturation 13 mais le ou les inflammateurs peuvent être disposés n'importe où ailleurs sur l'enveloppe 11. L'inflammateur 14 est relié à un dispositif de commande (non représenté) à partir duquel l'ordre d'allumage est envoyé.

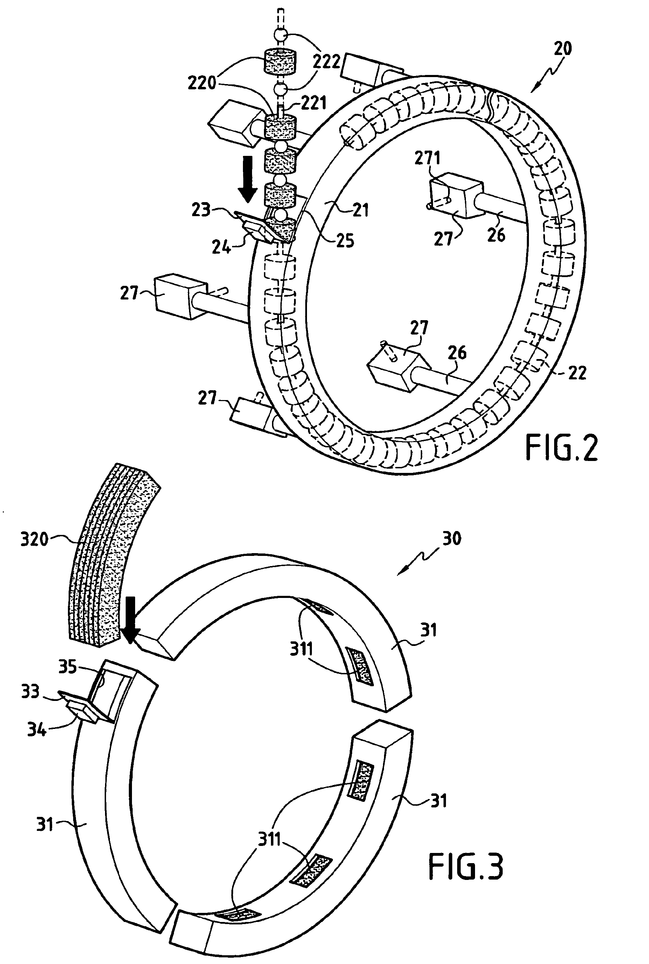

Le mode de réalisation de la figure 2 se distingue notamment de celui de la figure 1 en ce que la charge est constituée d'une pluralité d'éléments assemblés de manière à former une chaîne articulée. Plus précisément, un générateur de gaz 20 comprend une charge 22 constituée d'une pluralité de chargements unitaires 220 en forme de bague ou de disque. Les éléments de chargement 220 sont maintenus ensembles par un câble de liaison 221 qui traverse chacun des éléments. Les éléments sont maintenus espacés les uns des autres sur le câble 221 au moyen d'entretoises 222 interposées entre chaque élément lors de l'assemblage de la charge. Les entretoises 222 permettent de ménager un espace entre les éléments de chargement qui facilite leur disposition dans l'enveloppe annulaire.

Le générateur 20 de la figure 2 se distingue en outre de celui de la figure 1 en ce qu'il comprend des moyens pour acheminer les gaz produits dans l'enveloppe à distance de celle-ci. A cet effet, le générateur 20 comprend des conduits 26 débouchant d'un côté dans l'enveloppe 21 du générateur et, de l'autre côté, dans des collecteurs 27 comportant au moins un orifice d'injection 271 pour le passage des gaz issus du générateur. Ainsi, il est possible de positionner l'enveloppe du générateur à distance du ou des points d'injection des gaz.

Par ailleurs, le générateur de gaz, ou plus précisément l'enveloppe de celui-ci, peut être formé d'une ou plusieurs portions d'anneau. Comme illustré sur la figure 3, un générateur 30 peut être constitué à partir d'une ou plusieurs portions d'anneau chacune formée par une enveloppe 31. Le générateur 30 représenté à la figure 3 comprend trois portions d'anneau correspondant chacune à un générateur de gaz indépendant. Toutefois, suivant les besoins en gaz et l'espace disponible sur l'engin, le générateur de gaz peut être formé d'un nombre plus important de portions d'anneau ou au contraire d'une seule de ces portions d'anneau.

Ainsi, chaque portion comprend sa propre charge 320 qui peut être constituée d'un bloc de propergol de forme adaptée comme décrit précédemment. La charge peut être aussi composée d'une chaîne d'éléments de chargement comme celle décrite en relation avec la figure 2. Chaque portion d'anneau présente au moins un évent 311 pour l'éjection des gaz produits lors de la combustion de la charge. Chaque portion comprend également une ouverture de chargement 35 et un élément d'obturation 33 sur lequel est disposé un inflammateur 34. Dans les cas où l'enveloppe 31 ne peut être disposée au plus près du ou des points d'injection des gaz, elle peut être équipée des moyens d'acheminement des gaz tels que ceux décrits avec la figure 2.

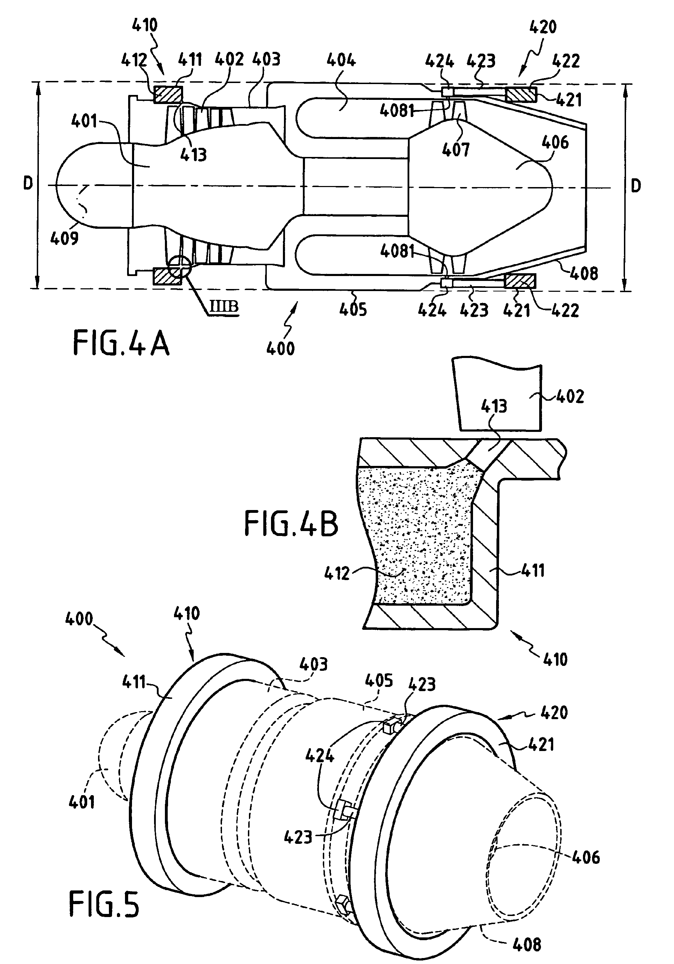

On explique maintenant une application possible du générateur de gaz conformément à l'invention, à savoir un dispositif de démarrage pour turboréacteur. Les figures 4 et 5 montrent très schématiquement un turboréacteur 400, par exemple destiné à assurer la propulsion d'un missile de croisière. Le turboréacteur comprend typiquement un compresseur 401, une chambre de combustion 404 et une turbine d'entraînement 406 solidaire en rotation du compresseur suivant un axe 409. Le compresseur 401 et la turbine 406 comportent chacun des aubes, respectivement 402 et 407. En fonctionnement, la rotation de la turbine 406 qui entraîne celle du compresseur 401 est assurée par l'action des gaz chauds issus de la chambre de combustion sur les aubes 407 de la turbine. Cependant, l'entraînement de la turbine par les gaz de combustion n'est possible qu'à partir d'une certaine vitesse de rotation de la turbine et du compresseur. Par conséquent, il est nécessaire d'utiliser un dispositif de démarrage pour amener la turbine et le compresseur à une vitesse de rotation suffisante avant la mise en marche proprement dite du turboréacteur.

Dans ce but, on utilise le générateur de gaz de l'invention décrit précédemment. Les figures 4 et 5 illustrent deux configurations possibles d'intégration d'un générateur de gaz dans un turboréacteur conformément à l'invention. Par souci de simplification, ces figures montrent un turboréacteur équipé de deux générateurs de gaz. Cependant, le turboréacteur est de préférence équipé d'un seul des deux générateurs présentés.

Selon une première configuration, un générateur de gaz 420 est disposé du côté de la turbine 406 du turboréacteur. A cet effet, une enveloppe annulaire 421 renfermant une charge 422 peut être fixée sur la périphérie externe du carter d'échappement 408 de la turbine 406. Le carter 408 constitue un bon logement pour l'intégration de l'enveloppe du générateur en raison de sa forme convergente. Ainsi, comme illustré sur la figure 4A, en disposant l'enveloppe 421 suffisamment en arrière sur le carter 408, le calibre ou diamètre d'encombrement D du turboréacteur qui est défini par le carter 405 de la chambre de combustion 404 n'est pas augmenté par la présence du générateur 420. L'enveloppe 421 étant placée en arrière des aubes de turbines 407, on utilise des conduits 423 pour acheminer les gaz de l'enveloppe à des collecteurs 424. Les collecteurs 424 coopèrent avec des orifices 4081 ménagés dans le carter de turbine 408 au-dessus des aubes 407. De cette façon, les gaz produits dans l'enveloppe 421 sont acheminés jusqu'à leurs points d'injection dans la turbine situés au niveau des aubes 407. Lorsque les gaz débouchent dans la turbine par les orifices 4081, ils agissent directement sur les aubes 407 entraînant alors la turbine en rotation.

Suivant la forme du turboréacteur, l'enveloppe 421 peut être fixée sur d'autres parties au voisinage de la turbine. En particulier, lorsque le turboréacteur présente une forme en taille de guêpe au niveau de la turbine, l'enveloppe peut être placée dans la partie resserrée de la structure.

L'autre possibilité d'intégration dans le turboréacteur consiste à disposer un générateur de gaz 410 du côté du compresseur 401. Ce choix d'intégration permet d'utiliser des éléments déjà présents dans la structure du turboréacteur. En effet, le turboréacteur comprend à l'origine, du côté compresseur, un tore d'alimentation en air comprimé qui est prévu par le concepteur pour permettre le démarrage sur banc d'essai en y injectant de l'air comprimé. Ainsi, le tore d'alimentation peut être avantageusement utilisé comme une enveloppe 411 dans laquelle on dispose une charge 412. Comme illustré sur la figure 4B, le tore d'alimentation comprend des orifices 413 qui permettent d'injecter du gaz sous pression tangentiellement aux aubes 402 du compresseur 401. Cette solution permet par conséquent une conception très intégrée du générateur de gaz sur le turboréacteur. Le tore d'alimentation d'origine peut être bien entendu modifié pour offrir un volume de stockage adapté au volume nécessaire de charge pyrotechnique et pour être équipé d'au moins une ouverture de chargement munie de son élément d'obturation ainsi que d'un inflammateur comme décrit précédemment.

Le turboréacteur représenté ici est équipé de générateurs ayant une enveloppe formant un anneau complet. Néanmoins, le turboréacteur peut être équipé d'un générateur de gaz formé d'une ou plusieurs portions d'anneau telles que décrites précédemment notamment en relation avec la figure 3.

La présente invention propose donc un générateur de gaz dont la conception peut être définie pour s'intégrer au mieux dans la structure sur laquelle il doit être disposé. Cela est possible notamment grâce à l'utilisation, comme source de gaz sous pression, d'une charge pyrotechnique qui peut être facilement façonnée dans une forme adaptée à celle de l'enveloppe. De plus, l'utilisation d'une charge pyrotechnique dans le générateur de gaz de l'invention n'implique pas de précautions particulières lors du stockage du générateur ou d'un engin équipé d'un tel générateur puisque la charge, segmentée ou chaînée, peut être placée au dernier moment dans l'enveloppe.

Enfin, s'agissant d'un turboréacteur ou tout autre machine tournante équipée d'aubes ou similaire, l'enveloppe peut être utilisée comme circuit d'injection pour de l'air comprimé afin d'effectuer des essais de fonctionnement en usine.

## Revendications

1. Générateur de gaz (10) comprenant une enveloppe (11) formant au moins une portion d'anneau dans laquelle est logée une charge pyrotechnique (12), l'enveloppe comprenant au moins une ouverture (111) pour éjecter les gaz produits lors de la combustion de la charge,
**caractérisé en ce que** la charge pyrotechnique est constituée d'une pluralité d'éléments de chargement unitaires (120 ; 220) disposés les uns derrière les autres à l'intérieur de l'enveloppe.

2. Générateur de gaz selon la revendication 1, **caractérisé en ce que** la charge pyrotechnique (12) est constituée d'une pluralité de segments de chargement unitaires (120) espacés les uns des autres au moyen d'éléments intercalaires élastiques (121).

3. Générateur de gaz selon la revendication 1, **caractérisé en ce que** la charge pyrotechnique (22) est constituée d'une chaîne formée d'une succession d'éléments de chargement unitaires (220).

4. Générateur de gaz selon la revendication 3, **caractérisé en ce** les éléments de chargement unitaires sont disposés en chaîne sur au moins un câble de liaison et maintenus espacés les uns des autres sur le câble par des entretoises (222).

5. Générateur de gaz selon l'une des revendication 1 à 4, **caractérisé en ce qu'**il comprend au moins un inflammateur (14) fixé sur l'enveloppe (11) pour commander l'allumage de la charge pyrotechnique (12).

6. Générateur de gaz selon l'une des revendications 1 à 5, **caractérisé en ce que** l'enveloppe (11) présente une ouverture (15) permettant d'introduire la charge pyrotechnique (12) à l'intérieur de l'enveloppe, l'ouverture étant munie d'un élément d'obturation (13).

7. Générateur de gaz selon l'une des revendications 1 à 6, **caractérisé en ce que** l'enveloppe (11) est constituée en un matériau métallique ou composite thermostructural.

8. Turboréacteur (400) comprenant un compresseur (401) et une turbine (406) solidaires en rotation **caractérisé en ce qu'**il comprend un générateur de gaz (410; 420) selon l'une des revendications 1 à 7, le générateur étant disposé au voisinage du compresseur ou de la turbine de manière à entraîner ces derniers en rotation avec les gaz produits lors de la combustion de la charge de propergol.

9. Turboréacteur selon la revendication 8, **caractérisé en ce que** le générateur de gaz (420) est placé au voisinage de la turbine (406).

10. Turboréacteur selon la revendication 9, **caractérisé en ce que** l'enveloppe (421) du générateur (420) est fixée sur la partie convergente du carter (408) de tuyère et **en ce que** le générateur comprend en outre des moyens (423; 424) pour acheminer les gaz produits dans l'enveloppe jusqu'aux aubes (407) de la turbine (406).

11. Turboréacteur selon la revendication 8, **caractérisé en ce que** le générateur de gaz (410) est placé au voisinage du compresseur (401).

12. Turboréacteur selon la revendication 11, **caractérisé en ce que** l'enveloppe (411) du générateur (410) est constituée par un tore d'alimentation en air comprimé dudit turboréacteur.

## Claims

1. A gas generator (10) comprising a casing (11) forming at least a portion of a ring and housing a pyrotechnic charge (12), the casing having at least one opening (111) for ejecting the gas produced during combustion of the charge, and the generator being **characterized in that** the pyrotechnic charge is made up of a plurality of unit charge elements (120; 220) disposed one behind the other inside the casing.

2. A gas generator according to claim 1, **characterized in that** the pyrotechnic charge (12) is made up of a plurality of unit charge segments (120) spaced apart from one another by means of resilient spacer elements (121).

3. A gas generator according to claim 1, **characterized in that** the pyrotechnic charge (22) is constituted by a chain made up of a succession of unit charge elements (220).

4. A gas generator according to claim 3, **characterized in that** the unit charge elements are disposed in a chain on at least one connection cable and are held spaced apart from one another on the cable by spacers (222).

5. A gas generator according to any one of claims 1 to 4, **characterized in that** it includes at least one ignitor (14) fixed to the casing (11) to control ignition of the pyrotechnic charge (12).

6. A gas generator according to any one of claims 1 to 5, **characterized in that** the casing (11) presents an opening (15) enabling the pyrotechnic charge (12) to be introduced into the casing, the opening being provided with a shutter element (13).

7. A gas generator according to any one of claims 1 to 6, **characterized in that** the casing (11) is made of a metal material or a thermostructural composite material.

8. A turbojet (400) comprising a compressor (401) and a turbine (406) constrained to rotate together, the turbojet being **characterized in that** it includes a gas generator (410; 420) according to any one of claims 1 to 7, the generator being disposed in the vicinity of the compressor or the turbine so as to entrain them in rotation with the gas produced during combustion of the propellant charge.

9. A turbojet according to claim 8, **characterized in that** the gas generator (420) is placed in the vicinity of the turbine (406).

10. A turbojet according to claim 9, **characterized in that** the casing (421) of the generator (420) is fixed on the converging portion (408) of the nozzle shroud (408) and **in that** the generator further includes means (423; 424) for conveying the gas produced in the casing to the blades (407) of the turbine (406).

11. A turbojet according to claim 8, **characterized in that** the gas generator (410) is placed in the vicinity of the compressor (401).

12. A turbojet according to claim 11, **characterized in that** the casing (411) of the generator (410) is constituted by a compressed air feed torous of said turbojet.

## Patentansprüche

1. Gasgenerator (10), umfassend eine Hülle (11), die wenigstens einen Ringabschnitt bildet, in dem eine pyrotechnische Ladung (12) aufgenommen ist, wobei die Hülle wenigstens eine Öffnung (111) aufweist, um die während der Verbrennung der Ladung erzeugten Gase auszustoßen,
**dadurch gekennzeichnet, daß** die pyrotechnische Ladung aus einer Vielzahl von einzelnen, in der Hülle hintereinander angeordneten Ladungselementen (120; 220) besteht.

2. Gasgenerator nach Anspruch 1, **dadurch gekennzeichnet, daß** die pyrotechnische Ladung (12) aus einer Vielzahl von einzelnen Ladungssegmenten (120) besteht, die mittels elastischer Zwischenelemente (121) voneinander beabstandet sind.

3. Gasgenerator nach Anspruch 1, **dadurch gekennzeichnet, daß** die pyrotechnische Ladung (22) aus einer Kette besteht, die von einer Folge von einzelnen Ladungselementen (220) gebildet ist.

4. Gasgenerator nach Anspruch 3, **dadurch gekennzeichnet, daß** die einzelnen Ladungselemente kettenförmig an wenigstens einem Verbindungskabel angeordnet sind und an dem Kabel durch Abstandsstücke (222) im Abstand voneinander gehalten sind.

5. Gasgenerator nach einem der Ansprüche 1 bis 4, **dadurch gekennzeichnet, daß** er wenigstens einen an der Hülle (11) befestigten Zünder (14) umfaßt, um das Zünden der pyrotechnischen Ladung (12) zu steuern.

6. Gasgenerator nach einem der Ansprüche 1 bis 5, **dadurch gekennzeichnet, daß** die Hülle (11) eine Öffnung (15) aufweist, die ermöglicht, die pyrotechnische Ladung (12) in die Hülle einzuführen, wobei die Öffnung mit einem Verschlußelement (13) versehen ist.

7. Gasgenerator nach einem der Ansprüche 1 bis 6, **dadurch gekennzeichnet, daß** die Hülle (11) aus einem metallischen Werkstoff oder hochtemperaturbeständigen Verbundwerkstoff besteht.

8. Turbostrahltriebwerk (400), umfassend einen Verdichter (401) sowie eine Turbine (406), die drehfest sind, **dadurch gekennzeichnet, daß** es einen Gasgenerator (410; 420) nach einem der Ansprüche 1 bis 7 umfaßt, wobei der Generator in der Nähe des Verdichters oder der Turbine angeordnet ist, so daß letztere mit den während der Verbrennung der Treibstoffladung erzeugten Gasen drehangetrieben werden.

9. Turbostrahltriebwerk nach Anspruch 8, **dadurch gekennzeichnet, daß** der Gasgenerator (420) in der Nähe der Turbine (406) angeordnet ist.

10. Turbostrahltriebwerk nach Anspruch 9, **dadurch gekennzeichnet, daß** die Hülle (421) des Generators (420) an dem konvergenten Teil des Düsengehäuses (408) befestigt ist und daß der Generator ferner Mittel (423; 424) umfaßt, um die in der Hülle erzeugten Gase bis zu den Schaufeln (407) der Turbine (406) zu befördern.

11. Turbostrahltriebwerk nach Anspruch 8, **dadurch gekennzeichnet, daß** der Gasgenerator (410) in der Nähe des Verdichters (401) angeordnet ist.

12. Turbostrahltriebwerk nach Anspruch 11, **dadurch gekennzeichnet, daß** die Hülle (411) des Generators (410) von einer Ringkammer zur Druckluftbeaufschlagung des Turbostrahltriebwerks gebildet ist.
